# EUROPEAN PATENT SPECIFICATION

(11) **EP 4 051 452 B1**
(45) Date of publication and mention of the grant of the patent: **11.12.2024**
(21) Application number: 19829298.9
(22) Date of filing: 31.10.2019
(51) Int. Cl.: B25B 13/06, B25B 21/00, B60B 29/00, B25B 21/02

(54) **SOCKET-SHAFT CONNECTION ASSEMBLY OF PNEUMATIC IMPACT WRENCH**
BUCHSEN-SCHAFT-VERBINDUNGSANORDNUNG FÜR EINEN PNEUMATISCHEN SCHLAGSCHRAUBER
ENSEMBLE DE LIAISON DOUILLE-ARBRE D'UNE CLÉ À IMPACT PNEUMATIQUE

(43) Date of publication of application: 07.09.2022
(73) Proprietor: Dino Paoli S.r.l., 42124 Reggio Emilia (IT)
(72) Inventor: PAOLI, Francesca, 42123 Reggio Emilia (IT)
(74) Representative: Luppi Intellectual Property S.r.l.
(86) International application number: PCT/IB2019/059362
(87) International publication number: WO 2021/084315

(56) References cited:
- DE-A1- 102011 112 152
- DE-U1- 202019 100 250

## Description

The invention relates to a socket-shaft connection assembly for pneumatic impact wrenches for the motorsport sector, used in car competitions.

In order to limit the pit-stop time, which can in many cases be critical to the result of a car competition, motorsport pneumatic impact wrenches must exhibit extremely high performance in terms of speed of rotation and mechanical resistance.

Presently the socket-shaft coupling in pneumatic impact wrenches for the motorsport sector is obtained by a square profile of the wrench shaft that couples with a square hole provided on a socket connection portion. The socket is constrained on the shaft by a transverse pin, with an axis orthogonal to the shaft axis.

When this type of coupling is subjected to a high number of revolutions, even more than 10,000 rpm, it produces vibrations on the shaft and swinging of the socket.

This results in the operator having to manually compensate the generated vibrations and swinging to keep the wrench in axis with the nut during operations for screwing and unscrewing the wheel from its hub, with the consequent risk that the nut is not sufficiently clamped and that pit-stop times are excessive. Obviously, risks for the health of the operator handling the motorsport wrench that can arise due to prolonged use of the wrench itself must be taken in consideration. Furthermore, as they are submitted to high stresses, the socket and the socket-holding shaft are exposed to break and high wear even due to vibrations.

Socket-shaft connection assemblies are known in the prior art.

DE202019100250 U relates to a recessed drive shaft intended for power tools. This document discloses the preamble of independent claim 10.

DE102011112152 A1 relates to a system for mounting vehicle wheels, in particular in motor sports, with at least one impact wrench.

An object of the invention is to improve coupling between socket and shaft of a motorsport pneumatic impact wrench.

A further obj ect is to improve clamping between socket and shaft in a motorsport pneumatic impact wrench.

Still a further object is to reduce or even overcome problems related to the use of the square profile in the socket-shaft coupling of traditional type.

Another object is to provide a socket-shaft connection assembly that fulfils the needs for efficient torque transmission and high mechanical resistance required in the motorsport sector.

Still another object is to obtain a socket-shaft coupling enabling to quickly mount and remove the socket.

According to the invention it is provided a socket-shaft connection assembly for motorsport pneumatic impact wrench comprising a socket-holding shaft, a socket, a fixing element of said socket for connecting said socket to said socket-holding shaft, characterized in that:
- said socket-holding shaft and said socket comprise respective grooved profiles cooperating for torque transmission between said socket-holding shaft and said socket;
- said fixing element is conformed to exert a force in the direction of the axis of the socket-holding shaft to connect said socket to said socket-holding shaft;
- centering said socket on said shaft occurs by means of a plurality of coupling conical surfaces respectively obtained on said fixing element, on said socket-holding shaft and on said socket, wherein said coupling conical surfaces are distinct from said grooved profiles.

Furthermore, according to the invention there is provided a motorsport pneumatic impact wrench socket.

Owing to the coupling by means of grooved profiles of the socket-holding shaft and of the socket and to conical surfaces, the torque transmission is obtained on assembly sections that are different from those enabling centering of the various assembly components. This allows to optimize the socket-shaft coupling since grooved profiles can substantially carry out the only torque transmission between socket-holding shaft and socket, thereby making such transmission relatively efficient. Furthermore, conical surfaces allow to obtain a highly precise centering, thus significantly reducing or even removing generation of swinging determined by eccentricity or axial off-set due to mounting.

The invention shall be better understood and implemented referring to the enclosed drawings which illustrate an exemplifying and non-limiting embodiment thereof, wherein:
Figure 1 is a rear perspective view of a plurality of elements of a socket-shaft connection assembly intended to be mounted on a pneumatic impact wrench for the motorsport sector;
Figure 2 is a front perspective and enlarged view of a socket-holding shaft provided between the plurality of elements of Figure 1;
Figure 3 is a side view of a motorsport pneumatic impact wrench wherein an exploded socket-shaft connection assembly is shown;
Figure 4 is a longitudinal section of the wrench of Figure 3 in a configuration wherein the assembly is mounted on the pneumatic impact wrench;
Figure 5 is a side view of the socket-holding shaft of Figure 2;
Figure 6 is a section of Figure 5 taken along an axial plane of the socket-holding shaft;
Figure 6A is a partial transversal section of a surface portion of the socket-holding shaft taken along the VI-VI plane of Figure 6;
Figure 7 is a front enlarged perspective view of a fixing element provided in the plurality of elements of Figure 1;
Figure 8 is a side enlarged view of the fixing element of Figure 7;
Figure 9 is an axial section of the fixing element of Figure 7;
Figure 10 is a side partially sectioned view of a socket provided in the socket-shaft connection assembly;
Figure 11 is a section taken along the XI-XI plane of Figure 10;
Figure 11A is a detail of Figure 11;
Figure 12 is an axial section of the socket-shaft connection assembly in a connected configuration.

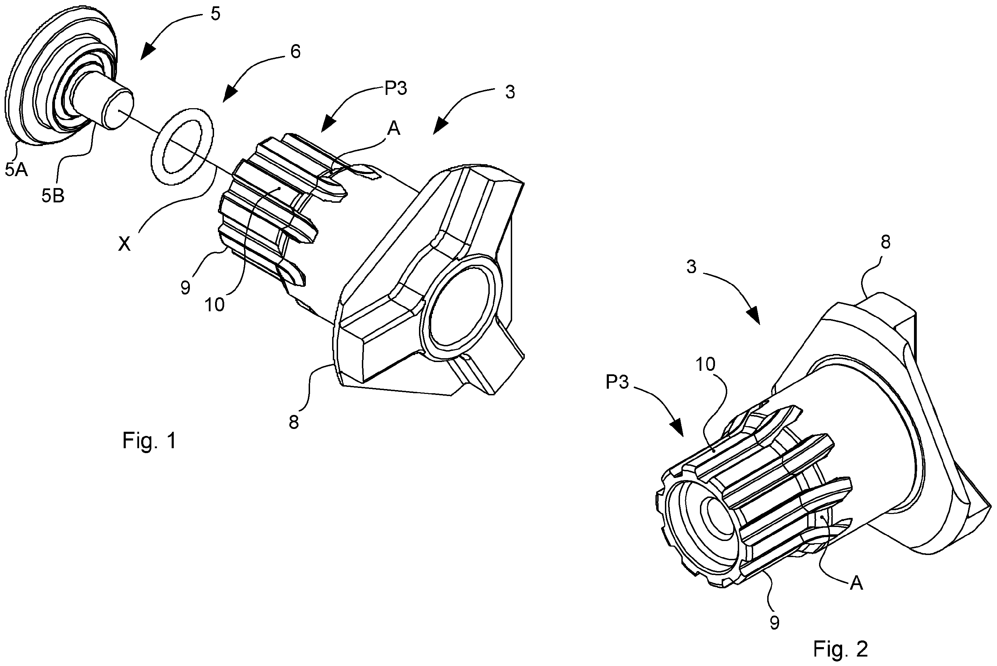

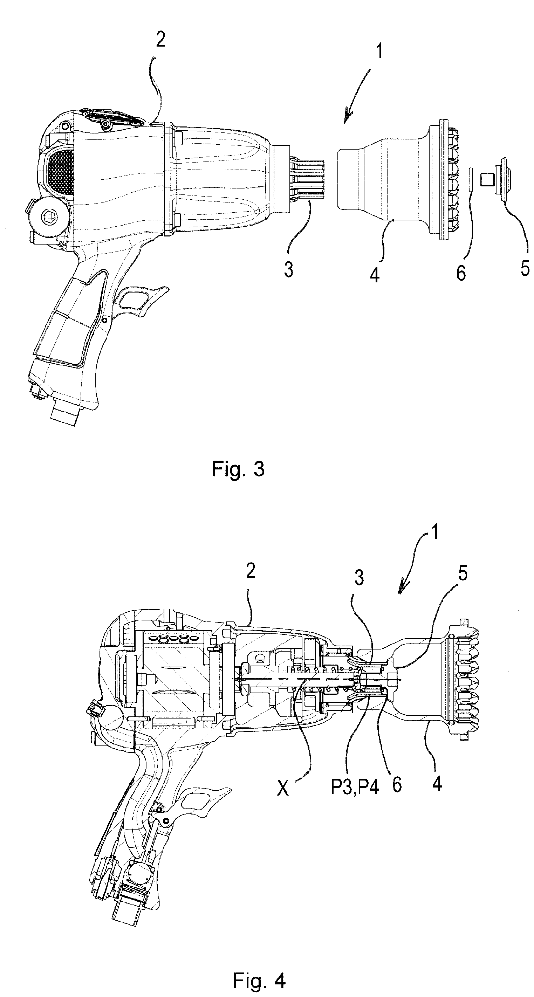

Referring to Figure 3 and Figure 1, a socket-shaft connection assembly 1 for motorsport pneumatic impact wrench 2 comprises a socket-holding shaft 3, a socket 4 and a fixing element 5 for connecting the socket 4 to the socket-holding shaft 3 along an axis X of the socket-holding shaft 3. As shown in Figure 1, a retaining member 6 may be present, for example an O-Ring, which is arranged between the fixing element 5 and the socket-holding shaft 3 when the socket 4 is mounted on the socket-holding shaft 3. The illustrated socket 4 is of the type used to screw or unscrew wheel nuts for competition cars, for example Formula 1, fixed to the hub thereof by means of a single central nut, but it can be of a different type, for example for wheels fixed to the hub by means of a plurality of nuts.

The socket-holding shaft 3 and the socket 4 comprise respective grooved profiles P3, P4 (Figure 4) cooperating for torque transmission between the socket-holding shaft 3 and the socket 4 when the impact wrench 2 is in function.

The fixing element 5 is conformed to exert a force in the direction of the axis X of the socket-holding shaft 3 to connect the socket 4 to the socket-holding shaft 3 itself.

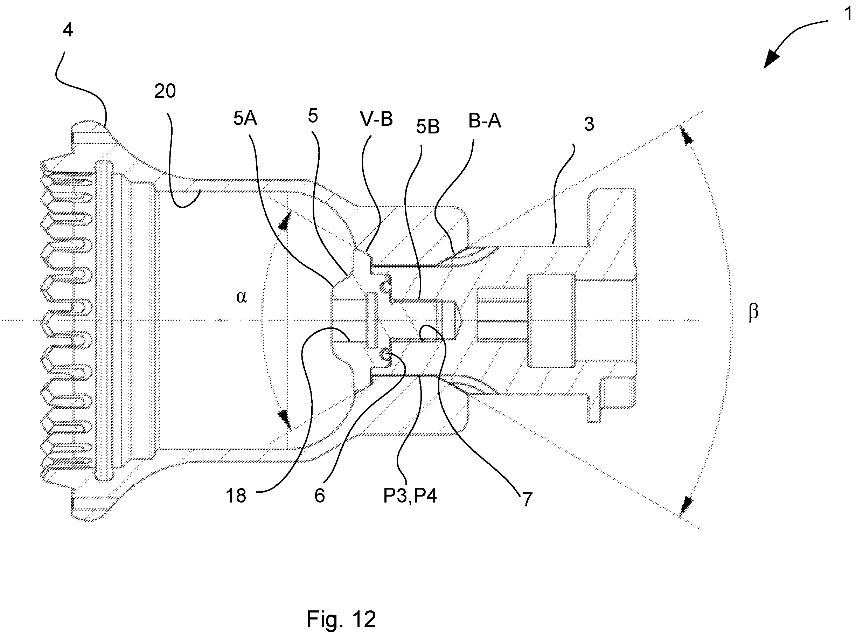

The centering of the socket 4 on the socket-holding shaft 3 occurs by means of a plurality of coupling conical surfaces V-B, B-A (Figure 12), obtained respectively on the fixing element 5, on the socket-holding shaft 3 and on the socket 4. The coupling conical surfaces are distinct from the grooved profiles P3, P4.

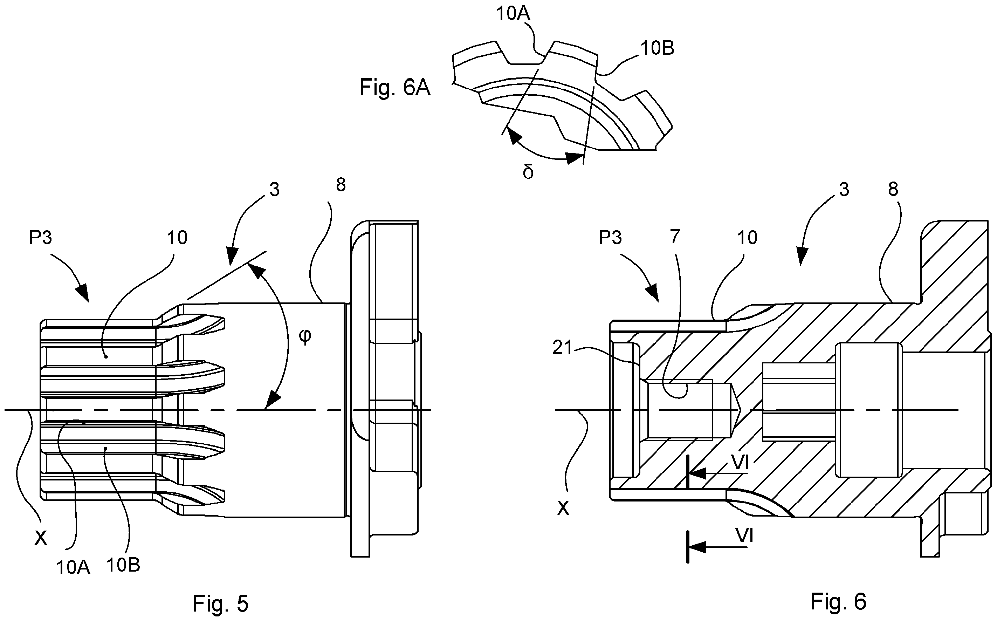

Referring to Figures 2, 5 and 6, the socket-holding shaft 3 comprises a driving end 8 with which it is connected in a known way, thus not herein described, to the shaft of the pneumatic impact wrench 2 by which it is rotated about its own axis X. The socket-holding shaft 3 further comprises a socket-holding end 9, arranged to receive the socket 4 and on which the grooved profile P3 is obtained. The grooved profile P3 comprises a plurality of teeth 10, ten in number in the illustrated version, angularly equally spaced on the surface of the socket-holding end 9. In non-illustrated versions, the number of teeth is other than ten. Each tooth 10 comprises flanks 10A, 10B that are rectilinear and tilted with respect to the tooth axis 10 (Figure 6A) so that the tooth base 10, that is closer to axis X, is larger than its tip. A tilt angle δ (delta) between two flanks 10A, 10B is for example of about 24°.

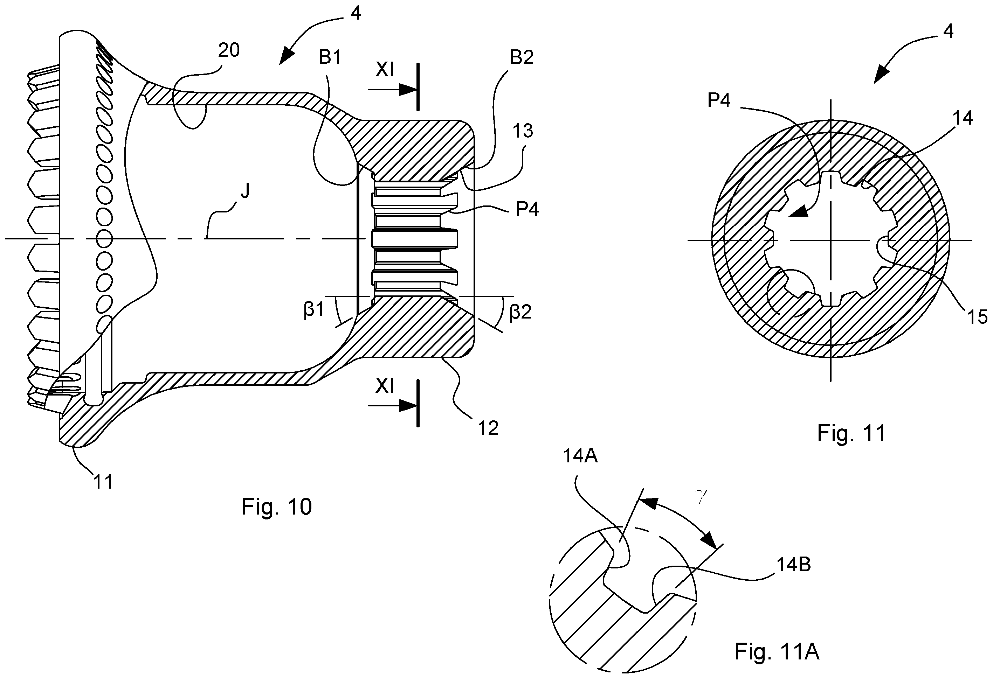

Referring to Figures 10 and 11, the socket 4 comprises a hollow body, having an operating end 11 by which the car wheel nut is engaged and a connecting end 12 by which socket 4 connects with the socket-holding shaft 3. The connecting end 12 comprises a hole 13 into which the socket-holding shaft 3 is fitted and the grooved profile P4, conformed to cooperate with the grooved profile P3 of the socket-holding shaft 3, is obtained on the walls of the hole 13. The grooved profile P4 comprises grooves 14, ten in number in the illustrated version, arranged to receive teeth 10 of the grooved profile P3. Therefore, grooves 14 are angularly equally spaced and define a same number of projections 15 alternating with grooves 14 thereof. The number of grooves can obviously be other than ten. Grooves 14 comprise walls 14A, 14B that are plane and tilted by an angle γ (gamma) which is the same as the tilt angle δ (delta) of flanks 10A, 10B of the teeth 10 of the profile P3. The depth of grooves 14, i.e. the distance between the bottom of the groove 14 and the crest of the projection 1 adjacent to the groove itself, is for instance 4.5 mm with a few tenths of a millimetre tolerance.

Profiles P3 and P4 have resistance sections of the tooth foot 10 on the socket-holding shaft 3 side and of the projections 15 on the socket 4 side that are equal between them. The constant section of the foot of the tooth 10 and of the foot of the projection 15 allows to have an extremely balanced mounted assembly at rotation. Furthermore, the described geometry allows a more harmonic distribution of tensions resulting in unbalanced deformations not occurring especially on the socket 4.

When profiles P3 and P4 are coupled, the mutual distance between the flanks of teeth 10 and the walls of the grooves 14 is rather low in the order of 0.10-0.20 mm or lower, while the crest of teeth 10 remains distant from the bottom of grooves 14 of about 0.50 mm. Available clearance allows an efficient torque transmission between socket-holding shaft 3 and socket 4, enabling at the same time to easily remove the socket 4 from the socket-holding shaft 3, for example, to be replaced.

Referring to Figure 12 and Figures 6-9, in order to movably fix the socket 4 to the socket-holding shaft 3, the fixing element 5 comprises a threaded portion 5B, in form of threaded stem, arranged to engage into a threaded hole 7 (Figure 6) obtained in the socket-holding end 9 of the socket-holding shaft 3. The threaded hole 7 is coaxial with axis X of the socket-holding shaft 3 and comprises a more internal threaded region and a stop surface 21 against which the fixing element 5 or the retaining member 6 can abut once mounted with the socket 4. The fixing element 5 further comprises a head 5A arranged to interact with an inner part of the socket 4 to restrain the socket 4 on the socket-holding shaft 3. The fixing element 5 serves substantially as a screw and the force it exerts in direction of the axis X corresponds to the clamping axial force of the fixing element 5 with which the socket 4 is constrained once mounted on the socket-holding shaft 3. On the brim 5A the fixing element 5 has a hollow section 18, for example hexagonal in section, to receive a known clamping tool, for example an Allen key. An annular recess 19 arranged to receive the retaining member 6 is provided on the head 5A in an underhead region of the fixing element 5.

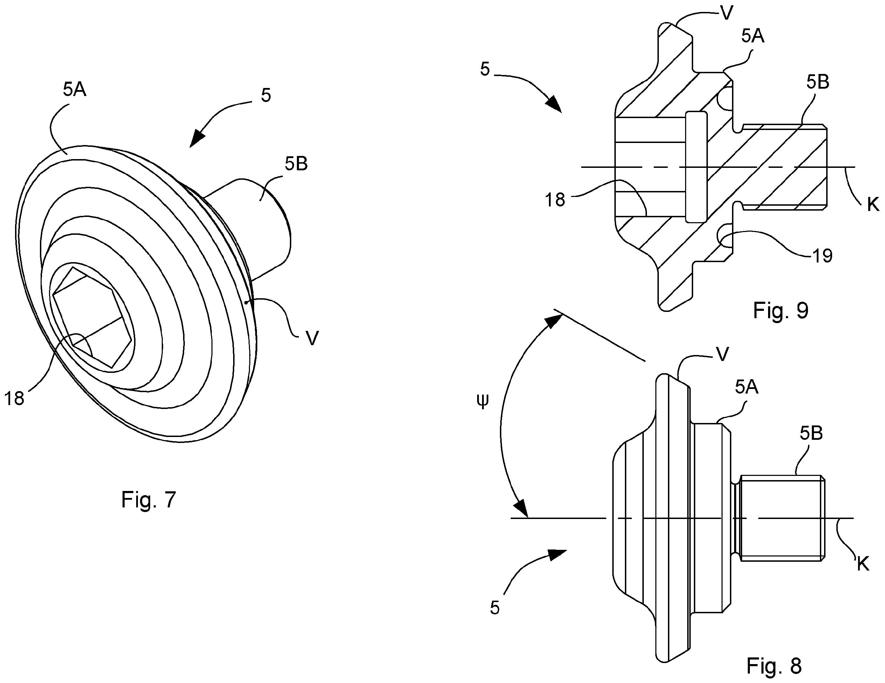

As indicated above, the torque transmission is implemented by grooved profiles P3 and P4. By contrast the axiality of the socket 4 with respect to the axis X of the socket-holding shaft is obtained by means of conical couplings. As shown in Figure 12, a first pair of coupling conical surfaces V-B is provided, one conical surface V of which is provided on the head 5A of the fixing element 5, a further conical surface B1 is provided on an inner part 16 of the connecting end 12 of the socket 4 where the hole 13 ends up in a cavity 20 of the socket 4, such cavity 20 being arranged to house the motorsport nut which must be screwed or unscrewed. In the section view of Figure 12, conical surfaces V and B1 of the first pair of coupling conical surfaces V-B have a same vertex angle α (alpha), which is in particular of about 60°, being the vertex arranged in direction of the socket-holding shaft 3. It is further provided a second pair of coupling conical surfaces B-A, a conical surface B2 of which is obtained on the socket 4 and a further conical surface A is obtained on the socket-holding shaft 3 at an inlet aperture 17 of the hole 13. In section view of Figure 12, conical surfaces B2 and A of the second pair of coupling conical surfaces B-A have a same vertex angle β (beta), which is in particular equal to vertex angle α (alpha) of the first pair of conical surfaces V-B, for example of about 60°. The vertex of angle β (beta) is arranged in direction of cavity 20 of the socket 4. Centering is obtained by means of the two pairs of conical couplings clamped by means of the fixing element 5. These conical couplings have no interference and are extremely precise. In fact, the angle ϕ (phi) (Figure 5) which, in an axial section the conical surface A of the socket-holding shaft 3 forms with the axis X, is of 30° with +0.00° to +0.05° tolerance; furthermore, the conical surface A has a linear tolerance of 0.05 mm and a circularity tolerance of 0.05 mm. Similarly, angle β2 (beta2) (Figure 10), that the conical surface B2 forms with an axis parallel to the J axis of the socket 4, is of 30° with -0.00° to -0.05° tolerance; furthermore, the conical surface B2 has a linear tolerance of 0.005 mm and a circularity tolerance of 0.005 mm. Similarly, the angle β1 (beta1) (Figure 10) that the conical surface B1 forms with an axis parallel to the J axis of the socket 4, is of 30° with -0.00° to -0.05° tolerance; furthermore, the conical surface B1 has a linear tolerance of 0.005 mm and a circularity tolerance of 0.005 mm. Similarly, angle ψ (psi) (Figure 8) which the conical surface V forms with an axis parallel to the K axis of the fixing element 5, is of about 30° with +0.0° to +0.5° tolerance; furthermore, the conical surface V has a linear tolerance of 0.005 mm and a circularity tolerance of 0.005 mm.

Centering by means of pairs of conical surfaces substantially allows to reduce an axial clearance to zero, i.e. along axis X, between socket 4 and socket-holding shaft 3.

The retaining member 6 is interposed between the fixing element 5 and the socket-holding shaft 3 and is housed in the annular recess 19 and is in contact with a stop surface 21 to prevent unscrewing the fixing element 5 itself and creating a dampening micro-effect.

As indicated above, the configuration of the socket-shaft connection assembly 1 allows torque transmission by means of grooved profiles P3 and P4 with no centering made therefrom. By contrast, centering is obtained by the conical pairs V-B, B-A when they are clamped by the fixing element 5. Part of the torsion motion is transmitted by friction also on the centering conical pairs V-B, B-A, thereby relieving grooved profiles P3 and P4 from loads applied on teeth 10 and protrusions 15 when the high speed pneumatic impact wrench 2 is in function. It must be noted that 10000-12000 rpm of the pneumatic impact wrench 2, corresponding to the free number of revolutions, i.e. with no engagement between socket and nut, becomes of 4000 rpm in the working condition.

Furthermore, the socket 4 in the working condition is substantially aligned to the ideal axis of the nut to be screwed or unscrewed, this limiting swinging due to eccentricity or tilts with respect to the axis of the socket-holding shaft. This results in a lower rotation radial effect with a more precise engagement of the nut; the pneumatic impact wrench thus becomes more handy.

By significantly reducing swinging of the socket, return stresses on the abutting part of the pneumatic impact wrench are consequently reduced resulting, over time, in a reduced wear if compared to the traditional type of connection with square shaft. In other words, owing to the socket-shaft connection assembly 1 the working life of the wrench components, as well as that of the socket-holding shaft, has increased.

Furthermore, owing to the socket-shaft connection assembly 1, mounting the socket 4 on the socket-holding shaft 3 is easy and quick.

With respect to the square coupling, the socket-shaft connection assembly 1 allows to reduce local stresses caused by torsion and to highly distribute them thus resulting in a reduction of local deformations.

The coupling symmetry, wherein the resistant sections on socket and socket-holding shaft are substantially equal, involves a propagation of tensions that is also symmetrical, thereby points of crack initiation are reduced with consequent increase of the average life of the more stressed components.

It must be noted that during a motorsport pit stop, the wheel nut is screwed in an application time of about 11-15 hundredths of a second and is unscrewed in 9 hundredths of a second, with a nominal working pressure of the supply air of the pneumatic impact wrench of 25 bars; the maximum torque generated by unscrewing is of 4300 Nm, in case of a traditional square coupling.

Owing to the socket-shaft connection assembly 1 it is possible to reduce or even overcome problems connected to the use of the square profile in the traditional-type socket-shaft coupling, with reduction of vibrations and swinging of the socket.

Furthermore, the experiment shows that the socket-shaft connection assembly 1 allows to obtain an efficient torque transmission and has a high mechanical resistance and to maintain ease of assembling and removal of sockets of traditional systems.

Furthermore, the durability of the assembly components as well as of the pneumatic impact wrench is increased.

The skilled in the art recognises that the solution of surfaces with grooved profiles for torque transmission distinct from centering coupling conical surfaces, herein described in relation to a single-nut socket, can be adopted even as a solution for socket-shaft coupling for a different type of socket of the motorsport sector.

## Claims

1. A socket-shaft connection assembly for motorsport pneumatic impact wrench (2) comprising a socket-holding shaft (3), a socket (4), a fixing element (5) for connecting said socket (4) to said socket-holding shaft (3) along an axis (X) of said socket-holding shaft (3), **characterized in that**:
- said socket-holding shaft (3) and said socket (4) comprise respective grooved profiles (P3, P4) cooperating for torque transmission between said socket-holding shaft (3) and said socket (4);
- said fixing element is conformed to exert a force in the direction of the axis of the socket-holding shaft (3) to connect said socket (4) to said socket-holding shaft (3);
- on said fixing element (5), on said socket-holding shaft (3) and on said socket (4) a plurality of coupling conical surfaces (V-B, B-A) are obtained for centering said socket (4) on said socket-holding shaft (3), wherein said coupling conical surfaces (V-B, B-A) are distinct from said grooved profiles (P3, P4).

2. The socket-shaft connection assembly (1) according to claim 1, wherein said fixing element (5) comprises a threaded portion (5B) arranged to engage in a threaded hole (7) provided in said socket-holding shaft (3) to connect said socket (4) to said socket-holding shaft (3), said threaded hole (7) being aligned with the axis of said socket-holding shaft (3).

3. The socket-shaft connection assembly (1) according to claim 2, wherein in an underhead region of the fixing element (5) an annular recess (19) is provided that is arranged to receive a retaining member (6) to maintain said threaded portion (5B) in engagement position with said threaded hole (7).

4. The socket-shaft connection assembly (1) according to one of claims 1 to 3, wherein said grooved profiles (P3, P4) comprise teeth (10) obtained on said socket-holding shaft (3) and grooves (14) obtained in an inner surface of said socket (4), wherein flanks (10A, 10B) of said teeth (10) and walls (14A, 14B) of said grooves (14) are plane and tilted.

5. The socket-shaft connection assembly (1) according to claim 4, wherein a tilt angle (δ (delta)) of said teeth and a tilt angle (γ (gamma)) of said walls are equal to about 24°.

6. The socket-shaft connection assembly (1) according to any one of the preceding claims, wherein said plurality of coupling conical surfaces (V-B, B-A) comprises a first pair of conical surfaces (V, B1) respectively obtained on said socket (4) and on said fixing element (5) and a second pair of conical surfaces (A, B2) respectively obtained on said socket-holding shaft (3) and on said socket (4).

7. The socket-shaft connection assembly (1) according to claim 6, wherein with respect to an axial section plane said first pair of conical surfaces (V, B1) has a vertex angle (α (alpha)) equal to a further vertex angle (β (beta)) of said second pair of conical surfaces (B2, A).

8. The socket-shaft connection assembly (1) according to claim 7, wherein said vertex angle is of about 30°.

9. The socket-shaft connection assembly (1) according to any one of the preceding claims, wherein said socket (4) is conformed to engage a nut for motorsport single-nut wheels.

10. A motorsport pneumatic impact wrench socket arranged to be connected to a socket-holding shaft (3) of said pneumatic impact wrench (2) along an axis (X), **characterized in that** it is provided with:
- a grooved profile (P4) arranged to cooperate with a respective grooved profile (P3) of said socket-holding shaft (3) for torque transmission between said socket-holding shaft (3) and said socket (4);
- a connecting end (12) conformed to receive said socket-holding shaft (3) and a fixing element (5) along said axis (X) to connect said socket (4) to said socket-holding shaft (3);
- a first coupling conical surface (B1) arranged to couple with a correspondent conical surface (V) of said fixing element (5) and a second coupling conical surface (B2) arranged to couple with said socket-holding shaft (3) for centering said socket (4), wherein said first coupling conical surface (B1) and said second coupling conical surface (B2) are distinct from said grooved profile (P3).

11. The socket (4) according to claim 10, wherein said grooved profile (P4) comprises grooves (14) obtained in an inner surface of said socket (4), wherein walls (14A, 14B) of said grooves (14) are plane and tilted and arranged to interact with flanks (10A, 10B) of teeth (10) obtained on said socket-holding shaft (3).

12. The socket (4) according to claim 11, wherein a tilt angle (γ (gamma)) of said walls (14A, 14B) is of about 24°.

13. The socket (4) according to claim 11 or 12, wherein said grooves (14) are angularly equally spaced on said inner surface.

14. The socket (4) according to claim 13, wherein said grooves (14) are ten in number.

15. The socket (4) according to any one of claims 10 to 14, wherein said first and second coupling conical surfaces (B1, B2) have a vertex angle (α (alpha), β (beta)) of about 30°.

## Patentansprüche

1. Stecknuss-Schaft-Verbindungsanordnung für einen Druckluft-Schlagschrauber (2) für den Motorsport, umfassend einen Stecknuss-Halteschaft (3), eine Stecknuss (4), ein Befestigungselement (5) zum Verbinden der Stecknuss (4) mit dem Stecknuss-Halteschaft (3) entlang einer Achse (X) des Stecknuss-Halteschafts (3), **dadurch gekennzeichnet, dass:**
- der Stecknuss-Halteschaft (3) und die Stecknuss (4) jeweilige Rillenprofile (P3, P4) umfassen, die für eine Drehmomentübertragung zwischen dem Stecknuss-Halteschaft (3) und der Stecknuss (4) zusammenwirken;
- das Befestigungselement angepasst ist, um eine Kraft in der Richtung der Achse des Stecknuss-Halteschafts (3) auszuüben, um die Stecknuss (4) mit dem Stecknuss-Halteschaft (3) zu verbinden;
- an dem Befestigungselement (5), an dem Stecknuss-Halteschaft (3) und an der Stecknuss (4) eine Vielzahl von konischen Kopplungsoberflächen (V-B, B-A) zum Zentrieren der Stecknuss (4) auf dem Stecknuss-Halteschaft (3) erhalten sind, wobei sich die konischen Kopplungsoberflächen (V-B, B-A) von den Rillenprofilen (P3, P4) unterscheiden.

2. Stecknuss-Schaft-Verbindungsanordnung (1) nach Anspruch 1, wobei das Befestigungselement (5) einen Gewindeabschnitt (5B) umfasst, der eingerichtet ist, um in ein Gewindeloch (7) einzugreifen, das in dem Stecknuss-Halteschaft (3) bereitgestellt ist, um die Stecknuss (4) mit dem Stecknuss-Halteschaft (3) zu verbinden, wobei das Gewindeloch (7) mit der Achse des Stecknuss-Halteschafts (3) ausgerichtet ist.

3. Stecknuss-Schaft-Verbindungsanordnung (1) nach Anspruch 2, wobei in einem Unterkopfbereich des Befestigungselements (5) eine ringförmige Aussparung (19) bereitgestellt ist, die eingerichtet ist, um ein Rückhaltebauteil (6) aufzunehmen, um den Gewindeabschnitt (5B) in Eingriffsposition mit dem Gewindeloch (7) aufrechtzuerhalten.

4. Stecknuss-Schaft-Verbindungsanordnung (1) nach einem der Ansprüche 1 bis 3, wobei die Rillenprofile (P3, P4) Zähne (10), die auf der Stecknuss-Halteschaft (3) erhalten sind, und Rillen (14), die in einer Innenoberfläche der Stecknuss (4) erhalten sind, umfassen, wobei Flanken (10A, 10B) der Zähne (10) und Wände (14A, 14B) der Rillen (14) eben und geneigt sind.

5. Stecknuss-Schaft-Verbindungsanordnung (1) nach Anspruch 4, wobei ein Neigungswinkel (δ (Delta)) der Zähne und ein Neigungswinkel (γ (Gamma)) der Wände etwa 24° betragen.

6. Stecknuss-Schaft-Verbindungsanordnung (1) nach einem der vorstehenden Ansprüche, wobei die Vielzahl von konischen Kopplungsoberflächen (V-B, B-A) ein erstes Paar von konischen Oberflächen (V, B1), die jeweils auf der Stecknuss (4) und auf dem Befestigungselement (5) erhalten sind, und ein zweites Paar von konischen Oberflächen (A, B2) umfasst, die jeweils auf dem Stecknuss-Halteschaft (3) und an der Stecknuss (4) erhalten sind.

7. Stecknuss-Schaft-Verbindungsanordnung (1) nach Anspruch 6, wobei das erste Paar von konischen Oberflächen (V, B1) in Bezug auf eine axiale Schnittebene einen Scheitelwinkel (α (Alpha)) aufweist, der gleich einem weiteren Scheitelwinkel (β (Beta)) des zweiten Paares von konischen Oberflächen (B2, A) ist.

8. Stecknuss-Schaft-Verbindungsanordnung (1) nach Anspruch 7, wobei der Scheitelwinkel etwa 30° beträgt.

9. Stecknuss-Schaft-Verbindungsanordnung (1) nach einem der vorstehenden Ansprüche, wobei die Stecknuss (4) angepasst ist, um in eine Mutter für Einzelmutterräder für den Motorsport einzugreifen.

10. Stecknuss für einen Druckluft-Schlagschrauber für den Motorsport, die eingerichtet ist, um mit einem Stecknuss-Halteschaft (3) des Druckluft-Schlagschraubers (2) entlang einer Achse (X) verbunden zu werden, **dadurch gekennzeichnet, dass** sie versehen ist mit:
- einem Rillenprofil (P4), das eingerichtet ist, um mit einem jeweiligen Rillenprofil (P3) des Stecknuss-Halteschafts (3) für die Drehmomentübertragung zwischen der Stecknuss-Halteschaft (3) und der Stecknuss (4) zusammenzuwirken;
- einem Verbindungsende (12), das angepasst ist, um den Stecknuss-Halteschaft (3) und ein Befestigungselement (5) entlang der Achse (X) aufzunehmen, um die Stecknuss (4) mit dem Stecknuss-Halteschaft (3) zu verbinden;
- einer ersten konischen Kopplungsoberfläche (B1), die eingerichtet ist, um mit einer entsprechenden konischen Oberfläche (V) des Befestigungselements (5) gekoppelt zu werden, und einer zweiten konischen Kopplungsoberfläche (B2), die eingerichtet ist, um mit der Stecknuss -Halteschaft (3) zum Zentrieren der Stecknuss (4) gekoppelt zu werden, wobei die erste konische Kopplungsoberfläche (B1) und die zweite konische Kopplungsoberfläche (B2) sich von dem Rillenprofil (P3) unterscheiden.

11. Stecknuss (4) nach Anspruch 10, wobei das Rillenprofil (P4) Rillen (14) umfasst, die in einer Innenoberfläche der Stecknuss (4) erhalten sind, wobei Wände (14A, 14B) der Rillen (14) eben und geneigt und eingerichtet sind, um mit Flanken (10A, 10B) von Zähnen (10), die auf dem Stecknuss-Halteschaft (3) erhalten sind, aufeinander einzuwirken.

12. Stecknuss (4) nach Anspruch 11, wobei ein Neigungswinkel (γ (Gamma)) der Wände (14A, 14B) etwa 24° beträgt.

13. Stecknuss (4) nach Anspruch 11 oder 12, wobei die Rillen (14) auf der Innenoberfläche winkelmäßig gleichmäßig beabstandet sind.

14. Stecknuss (4) nach Anspruch 13, wobei die Rillen (14) zehn an der Zahl sind.

15. Stecknuss (4) nach einem der Ansprüche 10 bis 14, wobei die erste und die zweite konische Kopplungsoberfläche (B1, B2) einen Scheitelwinkel (α (Alpha), β (Beta)) von etwa 30° aufweisen.

## Revendications

1. Ensemble liaison douille-arbre pour une clé à chocs pneumatique pour sport motorisé (2) comprenant un arbre porte-douille (3), une douille (4), un élément de fixation (5) pour relier ladite douille (4) audit arbre porte-douille (3) le long d'un axe (X) dudit arbre porte-douille (3), **caractérisé en ce que:**
- ledit arbre porte-douille (3) et ladite douille (4) comprennent des profils rainurés (P3, P4) respectifs en coopération pour une transmission de couple entre ledit arbre porte-douille (3) et ladite douille (4);
- ledit élément de fixation est conçu pour exercer une force dans la direction de l'axe de l'arbre porte-douille (3) pour relier ladite douille (4) audit arbre porte-douille (3);
- sur ledit élément de fixation (5), sur ledit arbre porte-douille (3) et sur ladite douille (4), une pluralité de surfaces coniques d'accouplement (V-B, B-A) sont obtenues pour centrer ladite douille (4) sur ledit arbre porte-douille (3), dans lequel lesdites surfaces coniques d'accouplement (V-B, B-A) sont distinctes desdits profils rainurés (P3, P4).

2. Ensemble liaison douille-arbre (1) selon la revendication 1, dans lequel ledit élément de fixation (5) comprend une partie filetée (5B) agencée pour entrer en prise dans un trou fileté (7) prévu dans ledit arbre porte-douille (3) pour relier ladite douille (4) audit arbre porte-douille (3), ledit trou fileté (7) étant aligné sur l'axe dudit arbre porte-douille (3).

3. Ensemble liaison douille-arbre (1) selon la revendication 2, dans lequel dans une région inférieure de l'élément de fixation (5), un évidement annulaire (19) est prévu qui est agencé pour recevoir un élément de retenue (6) afin de maintenir ladite partie filetée (5B) en position de prise avec ledit trou fileté (7).

4. Ensemble liaison douille-arbre (1) selon l'une des revendications 1 à 3, dans lequel lesdits profils rainurés (P3, P4) comprennent des dents (10) obtenues sur ledit arbre porte-douille (3) et des rainures (14) obtenues dans une surface interne de ladite douille (4), dans lequel des flancs (10A, 10B) desdites dents (10) et des parois (14A, 14B) desdites rainures (14) sont plans et inclinés.

5. Ensemble liaison douille-arbre (1) selon la revendication 4, dans lequel un angle d'inclinaison (δ (delta)) desdites dents et un angle d'inclinaison (γ (gamma)) desdites parois sont égaux à environ 24°.

6. Ensemble liaison douille-arbre (1) selon l'une quelconque des revendications précédentes, dans lequel ladite pluralité de surfaces coniques d'accouplement (V-B, B-A) comprend une première paire de surfaces coniques (V, B1) respectivement obtenues sur ladite douille (4) et sur ledit élément de fixation (5) et une seconde paire de surfaces coniques (A, B2) respectivement obtenues sur ledit arbre porte-douille (3) et sur ladite douille (4).

7. Ensemble liaison douille-arbre (1) selon la revendication 6, dans lequel, par rapport à un plan de coupe axial, ladite première paire de surfaces coniques (V, B1) présente un angle de sommet (α (alpha)) égal à un angle de sommet (β (bêta)) supplémentaire de ladite seconde paire de surfaces coniques (B2, A).

8. Ensemble liaison douille-arbre (1) selon la revendication 7, dans lequel ledit angle de sommet est d'environ 30°.

9. Ensemble liaison douille-arbre (1) selon l'une quelconque des revendications précédentes, dans lequel ladite douille (4) est conçue pour entrer en prise avec un écrou pour des roues à écrou unique de sport motorisé.

10. Douille de clé à chocs pneumatique pour sport motorisé, agencée pour être reliée à un arbre porte-douille (3) de ladite clé à chocs pneumatique (2) le long d'un axe (X), **caractérisée en ce qu'**elle est pourvue:
- d'un profil rainuré (P4) agencé pour coopérer avec un profil rainuré (P3) respectif dudit arbre porte-douille (3) pour une transmission de couple entre ledit arbre porte-douille (3) et ladite douille (4);
- d'une extrémité de liaison (12) conçue pour recevoir ledit arbre porte-douille (3) et un élément de fixation (5) le long dudit axe (X) pour relier ladite douille (4) audit arbre porte-douille (3);
- d'une première surface conique d'accouplement (B1) agencée pour s'accoupler avec une surface conique (V) correspondante dudit élément de fixation (5) et une seconde surface conique d'accouplement (B2) agencée pour s'accoupler avec ledit arbre porte-douille (3) pour centrer ladite douille (4), dans laquelle ladite première surface conique d'accouplement (B1) et ladite seconde surface conique d'accouplement (B2) sont distinctes dudit profil rainuré (P3).

11. Douille (4) selon la revendication 10, dans laquelle ledit profil rainuré (P4) comprend des rainures (14) obtenues dans une surface interne de ladite douille (4), dans laquelle des parois (14A, 14B) desdites rainures (14) sont planes et inclinées et agencées pour interagir avec les flancs (10A, 10B) des dents (10) obtenues sur ledit arbre porte-douille (3).

12. Douille (4) selon la revendication 11, dans laquelle un angle d'inclinaison (γ (gamma)) desdites parois (14A, 14B) est d'environ 24°.

13. Douille (4) selon la revendication 11 ou 12, dans laquelle lesdites rainures (14) sont angulairement espacées de manière égale sur ladite surface interne.

14. Douille (4) selon la revendication 13, dans laquelle lesdites rainures (14) sont au nombre de dix.

15. Douille (4) selon l'une quelconque des revendications 10 à 14, dans laquelle lesdites première et seconde surfaces coniques d'accouplement (B1, B2) ont un angle de sommet (α (alpha), β (beta)) d'environ 30°.
